# EUROPÄISCHE PATENTANMELDUNG

(11) **EP 1 156 608 A2**
(43) Veröffentlichungstag der Anmeldung: **21.11.2001**
(21) Anmeldenummer: 01109685.6
(22) Anmeldetag: 19.04.2001
(51) Int. Cl.: H04B 10/213

(54) **Verfahren zur Regelung des Signal-Rausch-Abstandes von Optischen Add/Drop-Signalen**

(30) Priorität: 17.05.2000 DE 10024393
(71) Anmelder: SIEMENS AKTIENGESELLSCHAFT, 80333 München (DE)
(72) Erfinder: Edere, Christian, 81373 München (DE); Weiske, Claus-Jörg, 82256 Fürstenfeldbruck (DE)

(57) **Zusammenfassung**

Zur Regelung des Signal-Rausch-Abstandes (OSNR) von optischen Add/Drop-Signalen (ads) in einem optischen WDM-Übertragungssystem (WDMTS) mit einer Sendeeinheit (OTT TX), einer Empfangseinheit (OTT RX) und mindestens einem optischen Add/Drop-Multiplexer (OADM) zur Übertragung von optischen Express-Signalen (es1 bis esm) sowie mindestens einem optischen Add/Drop-Signal (ads) wird das Leistungsspektrum (LS) der vorverzerrten Express-Signale (es1 bis esm) ermittelt und der Signalpegel des mindestens einen optischen Add/Drop-Signales (ads) an das ermittelte Leistungsspektrum (LS) der Express-Signale (es1 bis esm) angepaßt.

## Beschreibung

Die Erfindung betrifft ein Verfahren zur Regelung des Signal-Rausch-Abstandes von optischen Add/Drop-Signalen eines optischen WDM-Übertragungssignals in einem optischen WDM-Übertragungssystem mit einer Sendeeinheit, einer Empfangseinheit und mindestens einem optischen Add/Drop-Multiplexer zur Übertragung von optischen Express-Signalen sowie mindestens einem optischen Add/Drop-Signal. Hierbei werden in der Empfangseinheit des WDM-Übertragungssystems die Signal-Rausch-Abstände der Express-Signale ermittelt sowie abhängig von den ermittelten Signal-Rausch-Abständen die Signalpegel der Express-Signale in der Sendeeinheit geregelt.

In bestehenden und zukünftigen optischen Übertragungssystemen, insbesondere WDM-Übertragungssystemen ("WDM = Wavelength Devision Multiplexing") werden optische Datenübertragungssignale mit unterschiedlichen Wellenlängen zur Herstellung von Datenverbindungen eingesetzt. Auf Wunsch von Netzkunden sollen von Netzbetreibern optische logische Verbindungen zwischen beliebigen Anschlußpunkten innerhalb des optischen Übertragungssystems, beispielsweise kurzzeitig, zur Verfügung gestellt werden, d.h. ein Teil der in einem optischen Übertragungssystems bestehenden optischen Verbindungen weist statischen Charakter und ein weiterer Teil nur kurze Lebensdauern auf.

Zur Erstellung derartig kurzzeitiger optischer Verbindungen sind bisher elektronisch arbeitende Cross-Connectoren bzw. Durchschalteeinrichtungen bekannt, wobei insbesondere zukünftig zur Ausnutzung der vorhandenen Netzwerkkapazitäten automatisch konfigurierbare optische Durchschalteinrichtungen - auch optische Add-Drop-Multiplexer (OADM) genannt - in den jeweiligen Konzentrationspunkten des Kommunikationsnetzes vorgesehen werden. Mit Hilfe derartiger optischer Add-Drop-Multiplexer (OADM) werden in den jeweiligen Konzentrationspunkten des Kommunikationsnetzes dem optischen Summensignal bzw. WDM-Übertragungssignal einzelene oder mehrere WDM-Kanäle bzw. WDM-Signale entnommen bzw. "gedropped" und andere hinzugefügt bzw. "geadded". Derartige WDM-Signale werden als lokale Add/Drop-Signale bezeichnet und WDM-Signale, die von einer Sendeeinheit über die gesamte optische Übertragungsstrecke, d.h. zumindest einen optischen Add/Drop-Mulitplexer, zu einer Empfangseinheit übertragen werden, sind unter der Bezeichnung Express-Signale bekannt.

Zur Optimierung des optischen Signal-Rausch-Abstands einer optischen n x 10 Gbit/s Übertragungsstrecke und somit der optischen Performance einzelner WDM-Signale, insbesondere derartiger Express-Signale, werden die Express-Signale am Eingang der optischen WDM-Übertragungsstrecke, d.h. in der Sendeeinheit, abhängig von den Eigenschaften der optischen WDM-Übertragungsstrecke, insbesondere der nicht linearen Eigenschaften, und der optischen Zwischenverstärker bezüglich ihrer Signalleistung mit Dämpfungsglieder derartig vorverzerrt, daß am Ende, d.h. in der Empfangseinheit, der optischen WDM-Übertragungsstrecke der optische Signal-Rausch-Abstand (OSNR) einen optimierten Wert aufweist. Ein optimierter Signal-Rausch-Abstand für sämtliche optischen WDM-Signale, insbesondere der Express-Signale, weist für jedes WDM-Signal denselben Wert bzw. dieselbe Amplitude auf. Durch eine derartige Kompensation der unterschiedlichen optischen Streckeneigenschaften individuell für das jeweilige WDM-Signal wird die Senderstreuung und beispielsweise die des optischen Übertragungssignals innerhalb des optischen Übertragungssystems ausgeglichen. Hierzu sind Verfahren zur Regelung des Signal-Rausch-Abstandes von Express-Signalen, insbesondere aus der Veröffentlichung von A.R. Chraplyvy, et.al. "End to End Equalization Experiments in Amplified WDM-Light Wave Systems", IEEE Photonics Technology Letters, Vol. 4, No. 4, April 1993 und aus "Unequalization in Amplified WDM Light Wave Transmissions Systems", IEEE Photonics Technology Letters, Vol. 4. No. 8, August 1992 sowie aus der Europäischen Patentanmeldung 92310342.8 bekannt.

Bei derartigen Verfahren wird jeweils durch die Dämpfung der Signalleistung der Express-Signale am Beginn der optischen WDM-Übertragungsstrecke, d.h. in der Sendeeinheit, der Signal-Rausch-Abstand geregelt. Jedoch sind derartige Verfahren für die automatische Signal-Rausch-Abstands-Regelung von lokalen Add/Drop-Signale, die beispielsweise in einem optischen Add/Drop-Multiplexer zum optischen Summensignal hinzuaddiert werden, nicht geeignet, d.h. die automatische Regelung wie im Falle der Express-Signale kann gemäß den bekannten Verfahren nicht durchgeführt werden.

Deshalb werden bei bisherigen Übertragungssystemen mit Übertragungsraten von 2.5 Gbit/s und Add/Drop-Funktionalität lokale Add/Drop-Signale im Einkopplungspunkt, d.h. in der Sendeeinheit oder im Add/Drop-Multiplexer, mit einem fest vorgegebenen Signalpegel eingekoppelt, wobei dieser fest vorgegebene Signalpegel derart gewählt wird, daß die bei der Übertragung von optischen Signalen auftretenden Nichtlinearen Effekte, beispielsweise die Stimulierte Ramanstreuung oder die Kreuzphasenmodulation, in der optischen Faser gering gehalten werden. Desweiteren werden durch die im optischen Übertragungssystem vorgesehen optischen Faserverstärker alle ankommenden WDM-Signale gemäß der empfangen Signalleistung verstärkt, jedoch ist hierbei das durch die Verstärkung addierte Signalrauschen unabhängig von der empfangen Signalstärke, welches zu einer Verschlechterung des Signal-Rausch-Abstandes OSNR für eine geringe Signalleistung aufweisende WDM-Signale führt. Bei optischen Übertragungssystemen mit Datenübertragungsraten größer als 10 Gbit/s ist jedoch der optische Signal-Rausch-Abstand insbesondere maßgeblich für die regenerationsfrei überbrückbare Übertragungsstreckenlänge, so daß es für den Betrieb derartig hochbitratiger optischen Übertragungssysteme erforderlich ist, den optische Signal-Rausch-Abstand der lokal eingekoppelten Add/Drop-Signale zu optimieren.

Die der Erfindung zugrunde liegende Aufgabe besteht nun darin, den optischen Signal-Rausch-Abstand von lokalen Add/Drop-Signalen zu optimieren bzw. eine Regelung anzugeben mit der der optimale optische Signal-Rausch-Abstand von lokalen Add/Drop-Signalen eingestellt werden kann. Die Aufgabe wird ausgehend von einem Verfahren gemäß den Merkmalen des Oberbegriffs des Patentanspruches 1 durch die Merkmale des kennzeichnenden Teils gelöst.

Der wesentliche Aspekt des erfindungsgemäßen Verfahrens ist insbesondere darin zu sehen, daß das Leistungsspektrum der Express-Signale ermittelt wird und der Signalpegel des mindestens einen optischen Add/Drop-Signales an das ermittelte Leistungsspektrum der Express-Signale angepaßt wird. Vorteilhaft wird am Ausgang der optischen Sendeeinheit bzw. des optischen Add/Drop-Multiplexers das Leistungsspektrum des optischen WDM-Übertragungssignals mit Hilfe eines optischen Spektrum-Analyzers ermittelt und am Eingang der optischen Sendeeinheit bzw. des optischen Add/Drop-Multiplexers der Signalpegel der eingekoppelten Add/Drop-Signale an das ermittelte Leistungsspektrum der Express-Signale angepaßt. Hierdurch weist besonders vorteilhaft das von der optischen Sendeeinheit ausgesandte bzw. das den optischen Add/Drop-Multiplexer verlassende und mit Hilfe des erfindungsgemäßen Verfahrens gewonnene optische WDM-Übertragunssignal eine zur Realisierung eines optimalen Signal-Rausch-Abstandes in der Empfangseinheit erforderliche optimale Vorverzerrung auf. Durch die erfindungsgemäße Signalpegeloptimierung sowohl für die Express-Signale als auch für die Add/Drop-Signale wird eine Erhöhung der Übertragungsreichweite ohne elektrische Regeneration des optischen WDM-Übertragungssignals möglich.

Ein weiterer Vorteil des erfindungsgemäßen Verfahrens ist darin zu sehen, daß die Anpassung des Signalpegels des mindestens einen Add/Drop-Signales in der Sendeeinheit und/oder im Add/Drop-Multiplexers mittels Extra- oder Interpolation des jeweils ermittelten Leistungsspektrums der Express-Signale durchgeführt wird - Anspruch 2. Durch die Extra- oder Interpolation des jeweils ermittelten Leistungsspektrums der Express-Signale wird auf einfache Weise der Signalpegel des mindestens einen Add/Drop-Signales derart eingestellt, daß das Leistungsspektrum des in das WDM-Übertragungssingal eingekoppelte, zumindest eine Add/Drop-Signal sich optimal hinsichtlich Amplitude und Phase in das ermittelte Leistungsspektrum der Express-Signale einfügt.

Zusätzlich wird erfindungsgemäß zur Anpassung des Signalpegels eines Add-Signals in dem mindestens einem Add/Drop-Multiplexer der Einfügeverlust für ein Express-Signal berechnet sowie der Signalpegel eines Drop-Signals gemessen und aus dem berechneten Einfügeverlust für ein Express-Signal und aus dem gemessen Signalpegel des Drop-Signals der für die Anpassung an das Leistungsspektrum der Express-Signale erforderliche Signalpegel des Add-Signals ermittelt sowie vor der Einkopplung in das WDM-Übertragungssignal eingestellt - Anspruch 3. Zur Einsparung des kostenintensiven und empfindlichen optischen Spektrum Analyzers in den Add/Drop-Mulitplexern kann die Anpassung des Signalpegels des einzukoppelnden Add-Signales derart durchgeführt werden, daß zunächst beispielsweise bei der Produktherstellung die Einfügedämpfung der optischen Komponenten für Drop-Signale und Add-Signale im optischen Add/Drop-Multiplexer bestimmt sowie der Einfügeverlust für ein Express-Signal im optischen Add/Drop-Multiplexer berechnet wird. Desweiteren wird der Signalpegel eines im optischen Add/Drop-Multiplexer ausgekoppelten Drop-Signals am Drop-Ausgang des optischen Add/Drop-Multiplexer gemessen und aus dem berechneten Einfügeverlust und aus dem gemessen Signalpegel des Drop-Signals der für die Anpassung an das Leistungsspektrum der Express-Signale erforderliche Signalpegel des Add-Signals ermittelt. Der Signalpegel des einzukoppelnden Add-Signales wird an den ermittelten erforderlichen Signalpegel angepaßt und das Add-Signal mit dem angepaßten Signalpegel in das optischen WDM-Übertragungssignal eingekoppelt. Gemäß dem erfindungsgemäßen Verfahren wird für mehrere Add-Signale der Signalpegel schrittweise an das Leistungsspektrum der Express-Signale angepaßt.

Besonders vorteilhaft wird erfindungsgemäß eine weitere Variante zur Regelung des Signal-Rausch-Abstandes im Add/Drop-Mulitplexer angegeben, bei der zur schrittweisen Anpassung der Signalpegel von zumindest einem Add-Signal zusätzlich zu den Express-Signalen zunächst ein Add/Drop-Signal zu den zumindest einen Add/Drop-Multiplexer übertragen wird und die durch das eine Add/Drop-Signal in dem zumindest einen Add/Drop-Multiplexer hervorgerufene prozentuale Signalleistungsänderung des optischen WDM-Übertragungssignals vor der Auskopplung des Add/Drop-Signals ermittelt wird. Anschließend wird der Signalpegel des Add-Signals vor der Einkopplung in das optische WDM-Übertragungssignal so eingestellt, daß das Verhältnis aus der Signalleistung des WDM-Übertragungssignals vor der Einkopplung des Add-Signals und der Signalleistung des WDM-Übertragungssignals nach der Auskopplung des Add/Drop-Signals und nach der Einkopplung des Add-Signals mit der ermittelten prozentualen Signalleistungsänderung übereinstimmt - Anspruch 4. Mit Hilfe dieser weiteren Variante des erfindungsgemäßen Verfahrens kann ein kostenintensiver und empfindlicher optischer Spektrum Analyzer in den jeweiligen Add/Drop-Mulitplexern eingespart werden. Hierzu wird die Anpassung des Signalpegels des einzukoppelnden Add-Signales derart durchgeführt werden, daß die einzelnen Add-Singale schrittweise angepaßt werden. Hierzu wird zusätzlich zu den optimal vorverzerrten Express-Signalen zunächst ein Add/Drop-Signal mitübertragen und am Eingang des zumindest einen Add/Drop-Multiplexer wird die hierdurch hervorgerufene prozentuale Signalleistungsänderung des optischen WDM-Übertragungssignals vor dem Auskopplungs- bzw. "Drop"-Punkt beispielsweise mit einer kostengünstigen Monitordiode gemessen. Im Weiteren wird der Signalpegel des Add-Signals vor der Einkopplung in das optische WDM-Übertragungssignal mit Hilfe eines regelbaren Dämpfungsgliedes so eingestellt, daß das Verhältnis aus der Signalleistung des eingekoppelten Add-Signals und der Signalleistung des durch den Add/Drop-Multiplexer übertragenen WDM-Übertragungssignals nach der Auskopplung des Add/Drop-Signals mit der gemessenen prozentualen Signalleistungsänderung übereinstimmt. Hierzu wird am Ausgang des Add/Drop-Multiplexers die Signalleistung des WDM-Übertragungssignals und am Add-Eingang des Add/Drop-Multiplexers die Signalleistung des Add-Signals beispielsweise jeweils mit einer weiteren Monitordiode bestimmt und deren Verhältnis gebildet, welches mit der vor dem "Drop"-Punkt ermittelten prozentualen Signalleistungsänderung verglichen wird. Im Folgenden wird der Signalpegel des Add-Signales derart geregelt, daß das Verhältnis aus der Signalleistung des WDM-Übertragungssignals und der Signalleistung des Add-Signals mit der ermittelten prozentualen Signalleistungsänderung übereinstimmt.

Des Weiteren wird erfindungsgemäß zur Ermittlung des Leistungsspektrums der Express-Signale besonders vorteilhaft mindestens ein Teil des optischen WDM-Übertragungssignals am Ausgang der Sendeeinheit und/oder des Add/Drop-Multiplexers jeweils ausgekoppelt - Anspruch 5. Mit Hilfe eines optischen "Tap"-Kopplers wird vorteilhaft ein geringer prozentualer Anteil des jeweiligen, zu messenden optischen Signals ausgekoppelt und anhand dessen die Signaleigenschaften bestimmt.

Besonders vorteilhaft wird erfindungsgemäß die Anpassung des Signalpegels des Add/Drop-Signals oder des Add-Signals oder des Drop-Signals mit Hilfe eines regelbaren Dämpfungsgliedes durchgeführt - Anspruch 6. Der Signalpegel der Add/Drop-Signale wird vorteilhaft mit Hilfe eines kostengünstigen und regelbaren Dämpfungsgliedes gedämpft. Das hierfür erforderliche Regelsignal muß keinen hohen Qualitätsanforderungen genügen und kann somit ohne erheblichen schaltungstechnischen Aufwand aus dem jeweiligen gemessenen Signal ermittelt werden.

Des Weiteren werden durch die Sendeeinheit und die Empfangseinheit mit Hilfe eines Netzmanagementsystems dem zumindest einem Add/Drop-Multiplexer die aus- bzw. einzukoppelnden Add/Drop-Signale angezeigt werden -Anspruch 7 - und durch den zumindest einem Add/Drop-Multiplexer werden mit Hilfe eines optischen Signalisierungssignals der Sendeeinheit und der Empfangseinheit die aus- bzw. eingekoppelnden Add/Drop-Signale angezeigt - Anspruch 8. Hierdurch werden die erfindungsgemäßen Regelungsvorgänge automatisiert und es wird eine Überwachung mit Hilfe des Netzmanagementsystem möglich.

Im folgenden wird das erfindungsgemäße Verfahren anhand von zwei Prinzipschaltbildern näher erläutert.
- Figur 1: zeigt in einem Prinzipschaltbild ein optisches WDM-Übertragungssystem mit der erfindungsgemäßen Regelung des Signal-Rausch-Abstandes von optischen Add/Drop-Signalen und
- Figur 2: zeigt beispielhaft in einem weiteren Prinzipschaltbild einen optischen Add/Drop-Multiplexer.

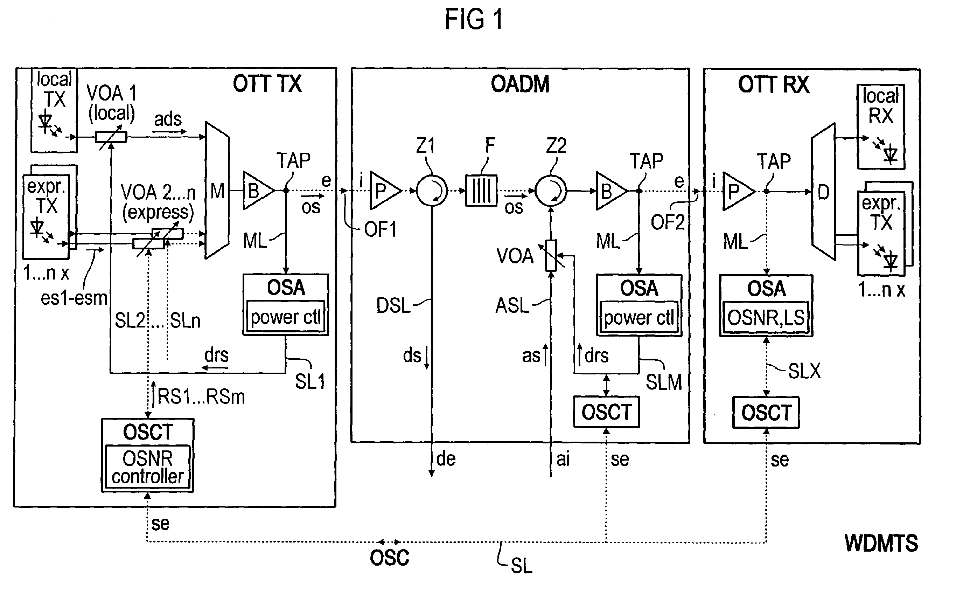

In Figur 1 ist in einem Prinzipschaltbild ein optisches WDM-Übertragungssystem WDMTS dargestellt, daß eine optische Sendeeinheit OTT TX, einen optischen Add/Drop-Multiplexer OADM sowie eine optische Empfangseinheit OTT RX aufweist. In der optischen Sendeeinheit OTT TX ist ein Multiplexer M, ein Boosterverstärker B, ein optischer Spektrumanalyser OSA sowie eine optische Signalisierungseinheit OSCT vorgesehen. Desweiteren weist die optische Sendeeinheit OTT TX einen lokalen optischen Sender und einen optischen Express-Sender localTX, expressTX zur Erzeugung von lokalen optischen Add/Drop-Signalen und von optischen Express-Signalen auf. Der lokale optische Sender localTX ist über ein erstes optisches regelbares Dämpfungsglied VOA1 mit einem Eingang des Multiplexers M verbunden. Die Ausgänge des optischen Express-Senders expressTX sind jeweils über ein zweites bis n-tes optisches regelbares Dämpfungsglied VOA2 bis VOAn mit einem Eingang des Multiplexers M verbunden. Der Ausgang des Multiplexers M ist mit dem Boosterverstärker B verbunden, der an den Ausgang e der optischen Sendeeinheit OTT TX angeschlossen ist. Desweiteren ist an den Ausgang des Boosterverstärkers B der Eingang des optischen Spektrumanalysers OSA angeschlossen, dessen Ausgang mit dem ersten optischen regelbaren Dämpfungsglied VOA1 über eine erste Signalisierungsleitung SL1 verbunden ist.

Die Signalisierungseinheit OSCT ist über eine zweite bis n-te Signalisierungsleitung SL2 bis SLn mit dem zweiten bis n-ten optischen regelbaren Dämpfungsgliedern VOA2 bis VOAn verbunden. Darüber hinaus ist die Signalisierungseinheit OSCT über eine externe Signalisierungsleitung SL mit den Signalisierungseinheiten OSCT des optischen Add/Drop-Multiplexers OADM und der optischen Empfangseinheit OTT RX verbunden.

Der optische Add/Drop-Multiplexer OADM weist beispielsweise einen optischen Vorverstärker P einen ersten Zirkulator Z1, ein optisches Filter F einen zweiten Zirkulator Z2, einen optischen Boosterverstärker B sowie einen optischen Spektrumanalyser OSA und eine Signalisierungseinheit OSCT auf, wobei der an den Eingang i des optischen Add/Drop-Multiplexers OADM angeschlossene optische Vorverstärker P über eine Verbindungsleitung mit dem ersten Zirkulator Z1 und der erste Zirkulator Z1 mit dem Eingang des optischen Filters F verbunden ist. Das optische Filter F ist an den zweiten Zirkulator Z2 angeschlossen, der an den Eingang des optischen Boosterverstärkers B angeschlossen ist. Der Ausgang des optischen Boosterverstärkers B ist an den Ausgang e des optischen Add/Drop-Multiplexer OADM geführt. Zwischen den optischen Boosterverstärker B und dem Ausgang e des optischen Add/Drop-Multiplexers OADM ist ein Tap-Koppler TAP eingeschaltet, der über eine Meßleitung ML mit dem Eingang des optischen Spektrumanalyser OSA verbunden ist. Der Ausgang des optischen Spektrumanalysers OSA ist sowohl an die Signalisierungseinheit OSCT als auch an ein an den zweiten Zirkulator Z2 angeschaltetes regelbares optisches Dämpfungsglied VOA über eine Steuerleitung SLM angeschlossen. Der Eingang des regelbaren optischen Dämpfungsgliedes VOA ist an den Add-Eingang ai des optischen Add/Drop-Multiplexers OADM angeschlossen. Des Weiteren ist der Drop-Ausgang de des optischen Add/Drop-Multiplexers OADM an einen Eingang des ersten Zirkulators Z1 geführt.

Die optische Empfangseinheit OTT RX weist einen optischen Vorverstärker P, einen optischen Demultiplexer D sowie eine Signalisierungseinheit OSCT und einen optischen Spektrumanalyser OSA auf. An die Ausgänge des optischen Demultiplexers D ist ein optischer Lokal-Empfänger localRX und ein mehrere Eingänge aufweisender optischer Express-Empfänger expressRX angeschlossen. Der Eingang des optischen Demultiplexers D ist über einen Tap-Koppler TAP mit dem Ausgang des optischen Vorverstärkers P verbunden, an dessen Eingang der Eingang i der optischen Empfangseinheit OTT RX geführt ist. An den Tap-Koppler TAP ist über eine Meßleitung ML der Eingang des optischen Spektrumanalysers OSA angeschlossen. Der Ausgang des optischen Spektrumanalysers OSA ist mit dem Eingang der Signalisierungseinheit OSCT verbunden. Der Signalisierungsausgang se der optischen Empfangseinheit OTT RX ist an den Ausgang der Signalisierungseinheit OSCT angeschlossen. Der Signalisierungsausgang se der optischen Empfangseinheit OTT RX ist über die externe Signalisierungsleitung Sl mit den Signalisierungseinheiten OSCT der optischen Sendeeinheit OTT TX und des optischen Add/Drop-Multiplexers OADM verbunden.

Des Weiteren ist der Ausgang e der optischen Sendeeinheit OTT TX beispielsweise über eine erste optische Faser OF1 mit dem Eingang i des optischen Add/Drop-Multiplexer OADM verbunden sowie der Ausgang e des optischen Add/Drop-Multiplexer OADM an den Eingang i der optische Empfangseinheit OTT RX über eine zweite optische Faser OF2 angeschlossen.

Bei Inbetriebnahme des optischen WDM-Übertragungssystem WDMTS werden zunächst erste bis m-te optische Express-Signale es1 bis esm von der optischen Sendeeinheit OTT TX über den optischen Add/Drop-Multiplexer OADM an die optische Empfangseinheit OTT RX übertragen. Hierbei werden die optischen Express-Signale es1 bis esm mit Hilfe des Multiplexers M zu einem optischen WDM-Übertragungssignal os zusammengefaßt und nach einer Verstärkung, beispielsweise mit Hilfe des Boosterverstärkers B, an den Ausgang e der optischen Sendeeinheit OTT TX gesteuert.

Das optische WDM-Übertragungssignal os wird über die erste optische Faser OF1 zum optischen Add/Drop-Multiplexer OADM übertragen. Am Eingang i des optischen Add/Drop-Multiplexers OADM wird das optische WDM-Übertragungssignal os beispielsweise mit Hilfe eines optischen Vorverstärkers P verstärkt und an den ersten Zirkulator Z1 übertragen. Mit Hilfe des dem ersten optischen Zirkulator Z1 nachgeschalteten optischen Filters F werden gezielt lokale optische Add/Drop-Signale ads, insbesondere Drop-Signale ds, aus dem optischen WDM-Übertragungssignal bzw. optischen Summensignal os ausgefiltert bzw. ausgekoppelt. Dabei wird die Auskopplung mit Hilfe des optischen Filters F derart durchgeführt, daß die Wellenlänge des auszukoppelnden optischen Drop-Signal ds durch das optische Filter F reflektiert wird und somit das optische Drop-Signal ds zum Ausgang des ersten optischen Zirkulators Z1 rückgestreut wird. Das rückgestreute optische Drop-Signal ds wird mit Hilfe des ersten Zirkulators Z1 auf die optische Drop-Signalleitung DSL und schließlich an den optischen Drop-Ausgang de des optischen Add/Drop-Multiplexers OADM umgelenkt. Die optischen Express-Signale es1 bis esm des optischen WDM-Übertragungssignals os werden durch das Filter F durchgelassen und an den zweiten optischen Zirkulator Z2 übertragen. Mit Hilfe des zweiten optischen Zirkulators Z2 können optische Add-Signale ads dem optischen WDM-Übertragungssignal bzw. dem optischen Summensignal os hinzugefügt bzw. in das optische Summensignal os eingekoppelt werden. Hierzu wird an Eingang des zweiten optischen Zirkulators Z2 über das regelbare optische Dämpfungsglied VOA das am optischen Add-Eingang ai des optischen Add/Drop-Multiplexers OADM anliegende, optische Add-Signal ads gesteuert und über den zweiten optischen Zirkulator Z2 in das optische WDM-Summensignal os eingefügt. Das am Ausgang des zweiten optischen Zirkulators Z2 anliegende optische WDM-Übertragungssignal os wird beispielsweise an den Boosterverstärker B übertragen, durch diesen verstärkt, und über den optischen Tap-Koppler TAP an den Ausgang e des optischen Add/Drop-Multiplexers OADM geführt.

Vom Ausgang e des optischen Add/Drop-Multiplexers OADM wird das optische WDM-Übertragungssignal os über die zweite optische Faser OF2 an den Eingang i der optischen Empfangseinheit OTT RX übertragen. Beispielsweise mit Hilfe des optischen Vorverstärkers P wird das am Eingang i der optischen Empfangseinheit OTT RX empfangene, optische WDM-Übertragungssignal os vorverstärkt und über den TAP-Koppler TAP an den Eingang des optischen Demultiplexer D übertragen. Im optischen Demultiplexer D wird das optische WDM-Übertragungssignal os bzw. optische Summensignal os in die einzelnen Express-Signale es1 bis esm aufgespalten und an die jeweiligen optischen Express-Empfänger expressRX weitergeleitet. Mit Hilfe des in der optischen Empfangseinheit OTT RX angeordneten Tap-Kopplers TAP wird beispielsweise ein Teil des optischen Summensignales bzw. WDM-Übertragungssignales os ausgekoppelt und über die Meßleitung ML an den optischen Spektrumanalyser OSA übermittelt. Im optischen Spektrumanalyser OSA wird das Leistungsspektrum LS der Express-Signale es1 bis esm ermittelt und ausgehend von dem ermittelten Leistungsspektrum LS der Express-Signale es1 bis esm die Signal-Rausch-Abstände OSNR der Express-Signale es1 bis esm bestimmt. Die Signal-Rausch-Abstände OSNR der Express-Signale es1 bis esm werden über eine Steuerleitung SLX an die Signalisierungseinheit OSCT übermittelt, welche die Signal-Rausch-Abstände OSNR auswertet und die gewonnenen Informationen in ein optisches Signalisierungssignal OSC einbindet. Das in der Signalisierungseinheit OSCT erzeugte optische Signalisierungssignal OSC wird über die externe Signalisierungsleitung SL an die weiteren Signalisierungseinheiten OADM im optischen WDM-Übertragungssystem WDMTS bzw. an die optische Sendeeinheit OTT TX und an den optischen Add/Drop-Multiplexer OADM übertragen.

Das in der optischen Sendeinheit OTT TX bzw. in der Signalisierungseinheit OSCT empfangene optische Signalisierungssignal OSC wird in der Signalisierungseinheit OSCT mit Hilfe eines optischen Signal-Rausch-Abstandskontroller OSNRcontroller ausgewertet und Regelsignale RS1 bis RSm zur Regelung der an die optischen Express-Sender expressTX angeschlossenen zweiten bis n-ten optischen regelbaren Dämpfungsglieder VOA2 bis VOAn erzeugt. Die Regelsignale RS1 bis RSm werden signalindividuell zur Regelung der jeweiligen optischen regelbaren Dämpfungsglieder VOA2 bzw. VOAn gebildet und an die über jeweils eine Regelleitung RL mit der Signalisierungseinheit OSCT verbundenen zweiten bis n-ten optischen regelbaren Dämpfungsglieder VOA2 bis VOAn übermittelt. Mit Hilfe der zweiten bis n-ten optischen regelbaren Dämpfungsglieder VOA2 bis VOAn wird der Signalpegel der optischen Express-Signale es1 bis esm derart gedämpft, daß das in der optischen Empfangseinheit OTT RX gemessene optische Signalleistungsspektrum LS der Express-Signale es1 bis esm bzw. die Signal-Rausch-Abstände OSNR der Express-Signale es1 bis esn optimal sind. Durch diese Vorverzerrung ( engl. "Preemphase") der Signalleistung der Express-Signale es1 bis esm in der optischen Sendeeinheit OTT TX mit Hilfe der zweiten bis n-ten optischen regelbaren Dämpfungsglieder VOA2 bis VOAn wird der Signal-Rausch-Abstand OSNR der Express-Signale es1 bis esm derart eingestellt, das die unterschiedlichen Streckeneigenschaften als auch die optische Senderstreuung hierdurch ausgeglichen werden können.

Gemäß der Erfindung werden zusätzlich zu den Express-Signalen es1 bis esm noch optische Add/Drop-Signale bzw. lokale optische Signale ads von der optischen Sendeeinheit OTT TX beispielsweise zum optischen Add/Drop-Multiplexer OADM oder vom optischen Add/Drop-Multiplexer OADM zur optischen Empfangseinheit OTT RX übertragen. Hierzu wird mit Hilfe des lokalen optischen Senders localTX in der optischen Sendeeinheit OTT TX ein lokales optischen Add/Drop-Signal ads erzeugt und über das erste optische regelbare Dämpfungsglied VOA1 an einen Eingang des Multiplexers M übertragen. Das lokale optische Add/Drop-Signal ads wird mit Hilfe des Multiplexers M zusammen mit den Express-Signalen es1 bis esm zu einem optischen WDM-Übertragungssignal os zusammengefaßt und vom Ausgang des Multiplexers M zum optischen Boosterverstärker B übertragen, durch den das optische WDM-Übertragungssignal os verstärkt wird. Nach der Verstärkung wird das optische WDM-Übertragungssignal os über den Tap-Koppler TAP an den Ausgang e der optischen Sendeeinheit OTT TX übertragen.

Zur erfindungsgemäßen Regelung des Signal-Rausch-Abstandes OSNR des optischen Add/Drop-Signales ads innerhalb des optischen WDM-Übertragungssystems WDMTS bzw. des optischen WDM-Übertragungssignales os wird mit Hilfe des Tap-Kopplers TAP beispielsweise ein Teil des optischen WDM-Übertragungssignales os ausgekoppelt und über eine Meßleitung ML an den optischen Spektrumanalyser OSA übertragen. Im Spektrumanalyser OSA wird mit Hilfe eines Leistungskontrollers power ctl. das Leistungsspektrum LS des optischen WDM-Übertragungssignales os bzw. der optischen Express-Signale es1 bis esm und des optischen Add/Drop-Signales ads ermittelt und ausgehend davon ein Dämpfungsregelsignal drs zur Regelung des ersten optischen regelbaren Dämpfungsgliedes VOA1 und somit des Signalpegels des optischen Add/Drop-Signales ads gebildet. Im optischen Spektrumanalyser OSA wird mit Hilfe des Leistungskontrollers power ctl. die Leistung bzw. der Signalpegel des optischen Add/Drop-Signales ads ermittelt und mittels Extra- oder Interpolation auf den sich aus dem zusätzlich ermittelten Leistungsspektrums LS der Express-Signale es1 bis esm ergebenden Leistungswert geregelt, d.h. der Signalpegel des optischen Add/Drop-Signales ads wird an die Signalpegel der Express-Signale es1 bis esm derart angepaßt, daß sich ein einheitliches Leistungsspektrum LS für das optische WDM-Übertragungssignal os ergibt. Das derart ermittelte Dämpfungsregelsignal drs wird von dem optischen Spektrumanalyser OSA über die erste Steuerleitung SL1 an das erste optische regelbare Dämpfungsglied VOA1 übertragen. Durch das Dämpfungsregelsignal drs werden die Dämpfungseigenschaften des optischen regelbaren Dämpfungsgliedes VOA1 variiert und somit der Signalpegel des optischen Add/Drop-Signales ads vor der Zusammenfassung mit den Express-Signalen es1 bis esm mit Hilfe des Multiplexers M solange verändert, bis das durch den optischen Spektrumanalyser OSA ermittelte Leistungsspektrum LS einheitliche Leistungswerte für die unterschiedlichen Express- bzw. Add/Drop-Signale es1 bis esm, ads aufweist.

Analog dazu wird erfindungsgemäß im optischen Add/Drop-Multiplexer OADM der Signalpegel der Add-Signale as vor der Einkopplung in das WDM-Übertragungssignal os mit Hilfe des zweiten Zirkulators Z2 an das ermittelte Leistungsspektrum LS der Express-Signale es1 bis esm angepaßt. Hierzu wird wiederum beispielsweise mit Hilfe des Tap-Kopplers TAP ein Teil des optischen WDM-Übertragungssignales os vor der Weiterleitung an den Ausgang e des optischen Add/Drop-Multiplexers OADM ausgekoppelt und über die Meßleitung ML an den optischen Spektrumanalyser OSA übertragen. Im optischen Spektrumanalyser OSA wird analog zur optischen Sendeeinheit OTT TX mit Hilfe eines Leistungskontrollers power ctl. das Leistungsspektrum LS des optischen WDM-Übertragungssignales os bzw. der optischen Express-Signales es1 bis esm und des optischen Add/Drop-Signales ads ermittelt und ausgehend davon ein Dämpfungsregelsignal drs zur Regelung des regelbaren optischen Dämpfungsgliedes VOA und somit des Signalpegels des optischen Add-Signales as gebildet. Im optischen Spektrumanalyser OSA wird mit Hilfe des Leistungskontrollers power ctl. die Leistung bzw. der Signalpegel des optischen Add-Signales as ermittelt und mittels Extra- oder Interpolation auf den sich aus dem zusätzlich ermittelten Leistungsspektrums LS der Express-Signale es1 bis esm ergebenden Leistungswert geregelt, d.h. der Signalpegel des optischen Add-Signales as wird an die Signalpegel der Express-Signale es1 bis esm derart angepaßt, daß sich ein einheitliches Leistungsspektrum LS für das optische WDM-Übertragungssignal os ergibt. Das derart ermittelte Dämpfungsregelsignal drs wird von dem optischen Spektrumanalyser OSA über die zweite Steuerleitung SL2 an das regelbare optische Dämpfungsglied VOA und an die Signalisierungseinheit OSCT übertragen. Durch das Dämpfungsregelsignal drs werden die Dämpfungseigenschaften des optischen regelbaren Dämpfungsgliedes VOA variiert und somit der Signalpegel des optischen Add-Signales ads bzw. as vor der Einkopplung in das WDM-übertragungssignal os mit Hilfe des zweiten Zirkulators Z2 solange verändert, bis das durch den optischen Spektrumanalyser OSA ermittelte Leistungsspektrum LS einheitliche Leistungswerte für die unterschiedlichen Express- und das Add-Signal esl bis esm, ads bzw. as aufweist.

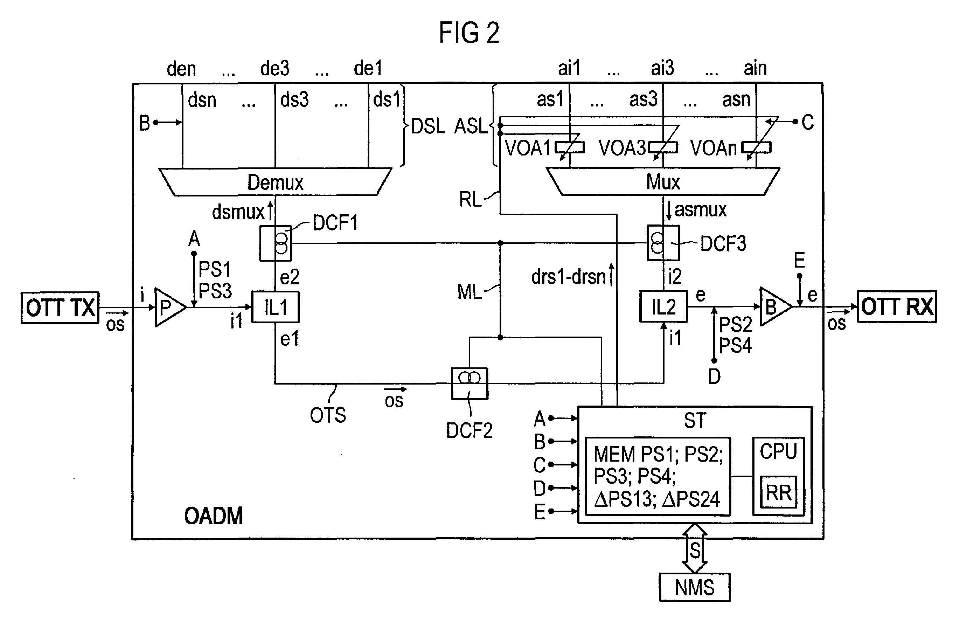

In Figur 2 ist beispielhaft in einem weiteren Prinzipschaltbild ein optischer Add/Drop-Multiplexer OADM dargestellt, bei dem weitere Varianten des erfindungsgemäßen Verfahrens zur Regelung des Signal-Rausch-Abstandes OSNR von Add/Drop-Signalen ads, insbesondere in einem Add/Drop-Multiplexers OADM, realisiert sind. Der optische Add/Drop-Multiplexer OADM weist beispielhaft einen Multiplexer Mux, einen Demultiplexer Demux, eine Steuereinheit ST sowie eine erste bis dritte Dispersionskompensationseinheit DCF1 bis DCF3 und einen ersten und zweiten Ausgänge und Eingänge aufweisenden Interleaver IL1,IL2 auf. Des Weiteren weist der optische Add/Drop-Multiplexer OADM einen Eingang i, einen Ausgang e sowie ein bis n-te Drop-Signalausgänge de1 bis den und ein bis n-te Add-Signaleingänge ai1 bis ain auf.

Der Eingang i des optischen Add/Drop-Multiplexers OADM ist mit dem Eingang eines optischen Vorverstärkers P verbunden, welcher an den ersten Eingang il des ersten Interleavers IL1 angeschlossen ist. Der erste Ausgang el des ersten Interleavers IL1 ist über eine optische Übertragungsfaser OTS mit der zweiten Dispersionskompensationseinheit DCF2 und schließlich mit dem ersten Eingang il des zweiten Interleavers IL2 verbunden. Der zweite Ausgang e2 des ersten Interleavers IL1 ist über die erste Dispersionskompensationseinheit DCF1 an den Eingang des Demultiplexers Demux angeschlossen, dessen Ausgänge über Dropsignalleitungen DSL an jeweils einen Drop-Signalausgang de1 bis den des optischen Add/Drop-Multiplexers OADM angeschlossen sind.

Der zweite Eingang i2 des zweiten Interleavers IL2 ist über die dritte Dispersionskompenstionseinheit DCF3 an den Ausgang des Multiplexers M angeschlossen, wobei jeweils ein Eingang des Multiplexers M mit jeweils einem Ausgang einer der ersten bis n-ten regelbaren optischen Dämpfungsglieder VOA1 bis VOAn verbunden ist. Der Eingang der ersten bis n-ten regelbaren optischen Dämpfungsglieder VOA1 bis VOAn ist jeweils an einen der ein bis n-ten Add-Signaleingänge ai1 bis ain über jeweils eine Addsignalleitung ASL angeschlossen. Zusätzlich sind die ersten bis n-ten regelbaren optischen Dämpfungsglieder VOA1 bis VOAn über Regelleitungen RL mit der Steuereinheit ST verbunden. Am Ausgang des zweiten Interleavers IL2 ist ein Boosterverstärker B angeschlossen, dessen Ausgang an den Ausgang e des optischen Add/Drop-Multiplexers OADM geführt ist.

In der Steuereinheit ST sind eine Recheneinheit CPU und eine Speichereinheit MEM vorgesehen, wobei in der Recheneinheit CPU eine Regelungsroutine RR ausgeführt wird. Des Weiteren ist an die Steuereinheit ST die erste bis dritte Dispersionskompensationseinheit DCF1 bis DCF3 über Meßleitungen ML angeschlossen und zur Realisierung des erfindungsgemäßen Verfahrens sind beispielhaft erste bis fünfte, im optischen Add/Drop-Multiplexer OADM angeordnete Meßpunkte A bis E vorgesehen. An den Meßpunkten wird beispielsweise mit Hilfe eines Tap-Kopplers TAP - in Figur 2 nicht dargestellt - ein Teil des WDM-Übertragungssignals os ausgekoppelt und beispielsweise mit Hilfe einer Monitordiode - nicht in Figur 2 dargestellt - die Signaleigenschaften, insbesondere die Signalleistung bzw. der Signalpegel, des WDM-Übertragungssignals os bestimmt. Die ersten bis fünften Meßpunkte A bis E sind jeweils über Meßleitungen ML (in Figur 2 mit Hilfe von Abgriffspunkten angedeutet) mit der Steuereinheit ST verbunden, wobei der erste Meßpunkt A zwischen dem Vorverstärker P und dem ersten Eingang des ersten Interleavers IL1 und der zweite Meßpunkt B beispielsweise am n-ten Ausgang des Demultiplexers Demux gewählt ist. Der dritte Meßpunkt C liegt beispielsweise zwischen dem n-ten Add-Signaleingang ain und dem Eingang des n-ten regelbaren optischen Dämpfungsgliedes VOAn. Der vierte Meßpunkt D ist beispielsweise zwischen dem Ausgang e des zweiten Interleavers IL2 und dem Boosterverstärker B gewählt und der fünfte Meßpunkt E ist beispielsweise zwischen dem Boosterverstärker B und dem Ausgang e des optischen Add/Drop-Multiplexers OADM vorgesehen.

Ananog zu Figur 1 liegt auch in Figur 2 am Eingang i des optischen Add/Drop-Multiplexers OADM das beispielsweise von der optischen Sendeeinheit OTT TX gesendete WDM-Übertragungssignal os an, welches im optischen Add/Drop-Multiplexers OADM zur Vorverstärkung an den Vorverstärker P übertragen wird. Am sich an den Vorverstärker P anschließenden ersten Meßpunkt A wird eine erste Signalleistung bzw. der erste Signalpegel PS1 des optischen WDM-Übertragungssignals os , beispielsweise mit Hilfe eines Monitordiode, bestimmt, wobei das optische WDM-Übertragungssignal os zunächst nur optische Express-Signale es1 bis esm aufweist. Die gemessene erste Signalleistung PS1 wird über eine Meßleitung ML an die Steuereinheit ST übertragen und dort in der Speichereinheit MEM gespeichert. Im Weiteren wird eine zweite Signalleistung PS2 des optischen WDM-Übertragungssignals os am vierten Meßpunkt D das optische WDM-Übertragungssignal os gemessen, wobei keine Einkopplung von Add-Signalen as1 bis asn über den Multiplexer M und mit Hilfe des zweiten Interleavers IL2 durchgeführt wird. Die gemessene zweite Signalleistung PS2 des optischen WDM-Übertragungssignals os wird an die Steuereinheit ST übermittelt und in der Speichereinheit MEM gespeichert.

Erfindungsgemäß wird im darauffolgenden Verfahrensschritt zusätzlich zu den Express-Signalen es1 bis esn, insbesondere nach dem in Figur 1 dargestellten Verfahren, ein optisches Add/Drop-Signal ads dem optischen Summensignal bzw. optischen WDM-Übertragungssignal os beispielsweise in der optischen Sendeeinheit OTT RX hinzugefügt und zum optischen Add/Drop-Multiplexer OADM übertragen.

Im optischen Add/Drop-Multiplexer OADM wird am ersten Meßpunkt A eine dritte Signalleistung PS3 des optischen WDM-Übertragungssignals os bestimmt und über eine Meßleitung ML der Steuereinheit ST angezeigt sowie in der Speichereinheit MEM abgespeichert. In der Speichereinheit ST werden gemäß einer in der Rechnereinheit CPU ablaufenden Regelungsroutine RR die am ersten Meßpunkt A gemessene, erste und dritte Signalleistung PS1,PS3 aus der Speichereinheit MEM geladen und die durch das Hinzuschalten eines Add/Drop-Signales ads hervorgerufe prozentuale erste Signalleistungsänderung ΔPS13 ermittelt.

Im Weiteren wird gemäß der Erfindung ein, beispielsweise das n-te, Add-Signal asn dem optischen Summensignal bzw. dem WDM-Übertragungssignal os über den Multiplexer M und mit Hilfe des zweiten Interleavers IL2 hinzugefügt. Nun wird eine vierte Signalleistung PS4 des optischen WDM-Übertragungssignals os nach der Auskopplung des Add/Drop-Signals ads mit Hilfe des ersten Interleavers IL1 und nach der Einkopplung des beispielsweise n-ten Add-Signales asn über den zweiten Interleavers IL2 in das optische WDM-Übertragungssignal os am vierten Meßpunkt D gemessen. Die gemessene vierte Signalleistung PS4 wird der Steuereinheit ST angezeigt und in der Speichereinheit MEM gespeichert. In der Speichereinheit ST werden gemäß der in der Rechnereinheit CPU ablaufenden Regelungsroutine RR die am vierten Meßpunkt D gemessene, zweite und vierte Signalleistung PS2,PS4 aus der Speichereinheit MEM geladen und die durch das Einkoppeln des n-ten Add-Signales asn hervorgerufe prozentuale zweite Signalleistungsänderung ΔPS24 ermittelt.

Gemäß der Regelungsroutine RR wird in der Rechnereinheit CPU der Steuereinheit ST ein erstes Pegel-Verhältnis V1 aus der ersten Signalleistungsänderung ΔPS13 und der ersten Signalleistung PS1 sowie ein zweites Pegel-Verhältnis V2 aus der zweiten Signalleistungsänderung ΔPS24 und der zweiten Signalleistung PS2 ermittelt. Das erste und zweite Pegel-Verhältnis V1,V2 werden gemäß der Regelungsroutine RR miteinander verglichen. Bei optimaler Anpassung des Signalpegels des n-ten Add-Signals asn an das Leistungsspektrum LS der Express-Kanäle es1 bis esm stimmen das erste und zweite Pegel-verhältnis V1,V2 überein. Liegt keine optimale Anpassung vor, so wird die Signalleistung beispielsweise des n-ten Add-Signales asn mit Hilfe des n-ten regelbaren optischen Dämpfunggliedes VOAn derart angepaßt, daß das zweite Pegel-Verhältnis V2 und das erste Pegel-Verhältnis V1 denselben Wert annehmen. Zur Regelung des n-ten Dämpfunggliedes VOAn wird gemäß der Regelungsroutine RR ein n-tes Dämpfungsregelungssignal drsn in Steuereinheit ST gebildet und über die Regelleitungen RL an das regelbare optische Dämpfungglied VOAn übertragen. Analog zu der beschriebenen Vorgehensweise werden schrittweise die Signalpegel der Add/Drop-Signale bzw. Add-Signale as1 bis asn an das Leistungspektrum LS der Epress-Kanäle esl bis esm ohne Zuhilfenahme eines kostenintensiven Spektrumanalyser OSA angepaßt und somit der Signal-Rausch-Abstand OSNR der Add/Drop-Signale ads beispielsweise in der optischen Empfangseinheit OTT RX optimiert.

Gemäß einer weiteren Ausgestaltung des erfindungsgemäßen Verfahrens wird beim Aufbau des optischen Add/Drop-Multiplexers OADM die Einfügedämpfung des Demultiplexers Demux, des Multiplexers Mux, des ersten und zweiten Interleavers IL1, IL2, d.h. vom ersten Meßpunkt A zum zweiten Meßpunkt B sowie vom dritten Meßpunkt C zum vierten Meßpunkt D, ermittelt. Die ermittelte Einfügedämpfungen werden als Systemparamter in der Speichereinheit MEM der Steuereinheit ST gespeichert. Die Einfügedämpfung der ersten bis dritten Dispersionskompensationseinheiten DCF1 bis DCF3 wird über die Meßleitungen ML der Steuereinheit ST angezeigt. Des Weiteren wird die Einfügedämpfung des optischen Add/Drop-Multiplexers OADM an sich, d.h. vom ersten Meßpunkt A zum vierten Meßpunkt D, derart bestimmt, daß der Einfügeverlust für das nur Express-Signale esl bis esm enthaltendende WDM-Übertragungssignal os anhand zweier Signalleistungsmessungen am ersten und vierten Meßpunkt A,D mit Hilfe von beispielsweise Monitordioden ermittelt wird. Hierzu wird am ersten Meßpunkt A und am vierten Meßpunkt D eine erste und zweite Signalleistung PS1, PS2 des nur Express-Signale es1 bis esn enthaltenden WDM-Übertragungssignals os ermittelt und der Steuereinheit ST angezeigt sowie in der Speichereinheit MEM gespeichert. Mit Hilfe der in der Rechnereinheit CPU ablaufenden Regelroutine RR wird der Einfügeverlust des optischen Add/Drop-Multiplexers OADM anhand der in der Speichereinheit MEM gespeicherten ersten und zweiten Signalleistung PS1,PS2 berechnet.

Anschließend werden die Add/Drop-Signale ads zum optischen WDM-Übertragungssignal os beispielsweise in der optischen Sendeeinheit OTT TX hinzugefügt. Im optischen Add/Drop-Multiplexer OADM werden die vorgesehenen Drop-Signale ds1 bis dsn mit Hilfe des ersten Interleavers IL1 beispielsweise als gemultiplextes Dropsignal dsmux ausgekoppelt sowie durch den Demultiplexer Demux in die ein bis n-ten Drop-Signale ds1 bi dsn aufgespalten und über die Ausgänge des Demultiplexers Demux an die ein bis n-ten Drop-Signalausgänge de1 bis den geleitet. Analog hierzu werden im optischen Add/Drop-Multiplexer OADM die an den ein bis n-ten Add-Signaleingängen ai1 bis ain anliegenden, ein bis n-te Add-Signale as1 bis asn über eines der ein bis n-ten Dämpfungsglieder VOA1 bis VOAn zum optischen Multiplexer Mux übertragen, zu einem gemultiplexten Add-Signal asmux zusammengefaßt und das gemultiplexte Add-Signal asmux mit Hilfe des zweiten Interleavers IL2 in das optische WDM-Übertragungssignal os eingekoppelt.

Zur Regelung der Signalleistung der ein bis n-ten Add-Signale as1 bis asn mit Hilfe der ein bis n-ten regelbaren optischen Dämpfungsglieder VOA1 bis VOAn wird mit Hilfe von Monitordioden - nicht in Figur 2 dargestellt - am zweiten Meßpunkt B die Signalleistung bzw. der Signalpegel des ausgekoppelten Drop-Signales ds1 bis dsn ermittelt und der Steuereinheit ST angezeigt, d.h. in der Steuereinheit ST liegen die Signalpegel der jeweiligen Drop-Signale ds1 bis dsn gespeichert in der Speichereinheit MEM vor. Anhand der gespeicherten Drop-Signalpegel und der gespeicherten systembedingten Einfügedämpfungen der Komponenten und des Add/Drop-Multiplexers OADM an sich werden mit Hilfe der Regelungsroutine RR Dämpfungsregelsignale drs1 bis drsn zur Regelung der ein bis n-ten Dämpfungsglieder VOA1 bis VOAn errechnet und gebildet sowie an diese über die Regelleitungen RL übermittelt. Hierbei wird der Signalpegel der ein bis n-ten Add-Signale as1 bis asn derartig gedämpft, daß die Signalpegel der ausgekoppelten ein bis n-ten Drop-Signale ds1 bis dsn unter Berücksichtigung der Einfügeverluste des optischen Add/Drop-Multiplexers OADM durch Signalpegel der eingekoppelten ein bis n-ten Add-Signale as1 bis asn kompensiert werden und sich somit ein gleichmäßig verteiltes, optimiertes Leistungsspektrum LS für das optische WDM-Übertragungssignal os ergibt, d.h. der für die Anpassung der Signalpegel der Add-Signale as1 bis asn an das Leistungsspektrum LS der Express-Signale es1 bis esm erforderliche Signalpegel wird durch die Steuereinheit ST ermittelt und mit Hilfe der regelbaren optischen Dämpfungsglieder VOA1 bis VOAn vor der Einkopplung in das optische WDM-Übertragungssignals os eingestellt.

In Figur 2 ist beispielhaft eine Schnittstelle S zwischen dem optischen Add/Drop-Multiplexer OADM bzw. der Steuereinheit ST und einem Netzmanagementsystem dargestellt, über die durch die optische Sendeeinheit OTT TX und durch die optische Empfangseinheit OTT RX dem optischen Add/Drop-Multiplexer OADM die aus- und einzukoppelnden Add/Drop-Signale es1 bis esn, ds1 bis dsn angezeigt werden.

Des Weiteren werden durch den optischen Add/Drop-Multiplexer OADM - siehe hierzu Figur 1 - über den an die Signalisierungseinheit OSCT angeschlossene externe Signalisierungsleitung SL sowohl der optischen Sendeeinheit OTT TX als auch der optischen Empfangseinheit OTT RX die ausgekoppelten Add/Drop-Signale esl bis esn, dsl bis dsn angezeigt

Die in der ersten und zweiten Figur 1 und 2 dargestellten optischen Add/Drop-Multiplexer OADM sind beispielhafte technische Realisierungen für eine Add/Drop-Funktionalität. Der Add/Drop-Vorgang kann naturgemäß durch unterschiedlichste - in den Ausführungsbeispielen nicht explizit dargestellte - technische bzw. physikalische Realisierungen durchgeführt werden.

## Patentansprüche

1. Verfahren zur Regelung des Signal-Rausch-Abstandes (OSNR) von optischen Add/Drop-Signalen (ads) eines optischen WDM-Übertragungssignals (os) in einem optischen WDM-Übertragungssystem (WDMTS) mit einer Sendeeinheit (OTT TX), einer Empfangseinheit (OTT RX) und mindestens einem optischen Add/Drop-Multiplexer (OADM) zur Übertragung von optischen Express-Signalen (es1 bis esm) sowie mindestens einem optischen Add/Drop-Signal (ads),
bei dem in der Empfangseinheit(OTT RX) die Signal-Rausch-Abstände (OSNR) der Express-Signale (es1 bis esm) ermittelt werden sowie abhängig von den ermittelten Signal-Rausch-Abständen (OSNR) die Signalpegel der Express-Signale (esl bis esm) in der Sendeeinheit (OTT TX) geregelt werden,
**dadurch gekennzeichnet,**
**daß** das Leistungsspektrum (LS) der Express-Signale (es1 bis esm) ermittelt wird und
**daß** der Signalpegel des mindestens einen optischen Add/Drop-Signales (ads) an das ermittelte Leistungsspektrum (LS) der Express-Signale (es1 bis esm) angepaßt wird.

2. Verfahren nach Anspruch 1,
**dadurch gekennzeichnet,**
**daß** die Anpassung des Signalpegels des mindestens einen Add/Drop-Signales (ads,as) in der Sendeeinheit (OTT TX) und/oder im Add/Drop-Multiplexers (OADM) mittels Extra- oder Interpolation des jeweils ermittelten Leistungsspektrums (LS) der Express-Signale (es1 bis esm) durchgeführt wird.

3. Verfahren nach Anspruch 1 und 2,
**dadurch gekennzeichnet,**
**daß** zur Anpassung des Signalpegels eines Add-Signals (ads) in dem mindestens einem Add/Drop-Multiplexer (OADM) der Einfügeverlust für mindestens ein Express-Signal (es1 bis esm) berechnet wird sowie der Signalpegel eines Drop-Signals (ds) gemessen wird und
**daß** aus dem berechneten Einfügeverlust für mindestens ein Express-Signal (es1 bis esm) und aus dem gemessen Signalpegel des Drop-Signals (ds) der für die Anpassung an das Leistungsspektrum (LS) der Express-Signale (es1 bis esm) erforderliche Signalpegel des Add-Signals (as) ermittelt und vor der Einkopplung in das WDM-Übertragungssignal (WDMTS) eingestellt wird.

4. Verfahren nach Anspruch 1 und 2,
**dadurch gekennzeichnet,**
**daß** zur schrittweisen Anpassung der Signalpegel von zumindest einem Add-Signal (as1 bis asn) zusätzlich zu den Express-Signalen (es1 bis esm) zunächst ein Add/Drop-Signal (ads) zu den zumindest einen Add/Drop-Multiplexer (OADM) übertragen wird,
**daß** die durch das eine Add/Drop-Signal (ads) in dem zumindest einen Add/Drop-Multiplexer (OADM) hervorgerufene prozentuale Signalleistungsänderung (ΔPS13) des optischen WDM-Übertragungssignals (os) vor der Auskopplung des Add/Drop-Signals (ads) ermittelt wird und
**daß** der Signalpegel des Add-Signals (asn) vor der Einkopplung in das optische WDM-Übertragungssignal (os) so eingestellt wird, daß das Verhältnis (ΔPS24) aus der Signalleistung des WDM-Übertragungssignals (PS3) vor der Einkopplung des Add-Signals (asn) und der Signalleistung des WDM-Übertragungssignals (PS3) nach der Auskopplung des Add/Drop-Signals (ads) und nach der Einkopplung des Add-Signals (asn) mit der ermittelten prozentualen Signalleistungsänderung (ΔPS13) übereinstimmt.

5. Verfahren nach einem der Ansprüche 1 bis 4,
**dadurch gekennzeichnet,**
**daß** zur Ermittlung des Leistungsspektrums (LS) der Express-Signale (es1 bis esn) mindestens ein Teil des optischen WDM-Übertragungssignals (os) am Ausgang der Sendeeinheit (OTT TX) und/oder des Add/Drop-Multiplexers (OADM) jeweils ausgekoppelt wird.

6. Verfahren nach einem der Ansprüche 1 bis 5,
**dadurch gekennzeichnet,**
**daß** die Anpassung des Signalpegels des Add/Drop-Signals (ads) oder des Add-Signals (as1 bis asn) oder des Drop-Signals (ds1 bis dsn) mit Hilfe eines regelbaren Dämpfungsgliedes (VOA, VOA1 bis VOAn) durchgeführt wird.

7. Verfahren nach einem der Ansprüche 1 bis 6,
**dadurch gekennzeichnet,**
**daß** durch die Sendeeinheit (OTT TX) und die Empfangseinheit (OTT RX) mit Hilfe eines Netzmanagementsystems (NMS) dem zumindest einem Add/Drop-Multiplexer (OADM) die aus- bzw. einzukoppelnden Add/Drop-Signale (ads, as1 bis asn, ds1 bis dsn) angezeigt werden.

8. Verfahren nach einem der Ansprüche 1 bis 6,
**dadurch gekennzeichnet,**
**daß** durch den zumindest einem Add/Drop-Multiplexer (OADM) mit Hilfe eines optischen Signalisierungssignals (OSC) der Sendeeinheit (OTT TX) und der Empfangseinheit (OTT RX) die aus- bzw. eingekoppelten Add/Drop-Signale (ads, as1 bis asn, ds1 bis dsn) angezeigt werden.

9. Vorrichtung zur Durchführung des Verfahrens nach Anspruch 1.
